# EUROPEAN PATENT APPLICATION

(11) **EP 4 350 120 A1**
(43) Date of publication of application: **10.04.2024**
(21) Application number: 22816392.9
(22) Date of filing: 26.05.2022
(51) Int. Cl.: E21D 11/38, F16B 5/02, F16B 33/00

(54) **FILLER FOR WATERPROOFING CORRUGATED STEEL PLATE BOLT FASTENER AND WATERPROOFING STRUCTURE OF CORRUGATED STEEL PLATE STRUCTURE USING SAME**

(30) Priority: 04.06.2021 KR 20210072519
(71) Applicant: Chungamenc Co., Ltd., Chungcheongbuk-do 27614 (KR)
(72) Inventor: RHEE, Seokho, Seoul 07071 (KR)
(74) Representative: dompatent von Kreisler Selting Werner - Partnerschaft von Patent- und Rechtsanwälten mbB
(86) International application number: PCT/KR2022/007513
(87) International publication number: WO 2022/255733

(57) **Abstract**

Disclosed are a filler for waterproofing a corrugated steel plate bolt fastener and a waterproofing structure of a corrugated steel plate structure using same, wherein when multiple corrugated steel plates are assembled according to a design diagram so as to fabricate a corrugated steel plate structure, adjacent corrugated steel plates can be simultaneously assembled and waterproofed without a separate waterproofing process. The filler for waterproofing a corrugated steel plate bolt fastener and a waterproofing structure of a corrugated steel plate structure using same are advantageous as follows: the period of time for constructing a corrugated steel plate structure can be reduced substantially; no separate waterproofing operation is necessary after assembling the corrugated steel plate structure, thereby substantially reducing construction costs; risks of safety hazards to workers can be reduced substantially; and uniform construction quality can be maintained regardless of the skill level of workers, thereby substantially improving customer satisfaction and reliability.

## Description

### [Technical Field]

The present invention relates to a filler for waterproofing a corrugated steel plate bolt fastener and a waterproofing structure of a corrugated steel plate structure using same, and more specifically, a filler for waterproofing a corrugated steel plate bolt fastener which prevents water leakage into a space between a bolt and a bolt hole when the corrugated steel plate structure is fabricated by fastening adjacent corrugated steel plates with bolts and nuts according to a design diagram, and a waterproofing structure of a corrugated steel plate structure using same.

### [Background Art]

Generally, for fastening bolts, which is a prerequisite for assembling corrugated steel plates, the corrugated steel plates are machined to have bolt holes through punching at a factory, then galvanized, and brought to a construction site.

The corrugated steel plates brought to the site as described above are fastened with bolts and nuts in accordance with a design diagram to complete a corrugated steel plate structure, and the bolt holes are each machined to have a diameter larger than a diameter of each of the bolts when the bolt holes are punched at the factory to facilitate the assembly of the corrugated steel plates at the site.

For example, the bolt holes punched and formed in the corrugated steel plates are each formed to have a diameter larger than a diameter of the bolt by about 4 mm to 6 mm at a crest or trough section generally and are formed to have a diameter larger than that of the bolt by up to about 10 mm at an inclined section of the corrugated steel plate, thereby enabling the corrugated steel plates to be easily assembled at the site.

As the bolt holes are formed in the corrugated steel plate to have a diameter larger than that of the bolts, a gap is produced between the bolt and the bolt hole, and water, fine silt, or the like on a back surface of the corrugated steel plate structure infiltrates through the space produced between the bolt and the bolt hole. Hence, a problem arises in that water or silt flows into the structure after the corrugated steel plate structure is completely constructed.

The water or silt flowing into the corrugated steel plate structure through the space produced between the bolt and the bolt hole does not affect the stability of the corrugated steel plate structure, but a problem arises in terms of usability due to water leakage when a passage under the corrugated steel plate structure is used.

Hence, as a waterproofing method for preventing water leakage through the space produced between the bolt hole punched in the corrugated steel plate and the bolt fastened in the bolt hole as described above, an asphalt bituminous coating method, a method of coating polyurea or the like around a bolt, or a method of covering a crest portion of a nut-fastened bolt with a cap together with a waterproofing material such as urethane, or the like is used.

The asphalt bituminous coating method is a method of spraying an asphalt bituminous material on a bolt fastening portion and coating a thread crest of a bolt of a nut fastening part by spraying the asphalt bituminous material on the entire outer surface of the corrugated steel plate.

This asphalt bituminous coating method has, in terms of constructability, advantages in that rapid coating can be performed by spray spraying and that a sufficient coating thickness can be secured with one coating.

However, the asphalt bituminous coating method is performed by spraying and applying a material different from the corrugated steel plate, and thereby an asphalt bituminous material can be separated from the corrugated steel plate when the assembled corrugated steel plates are exposed to sunlight for a long time after assembly. In addition, there are not only a problem in that in backfilling, a gap can be produced between the corrugated steel plate and the bituminous material due to the ductile behavior of the corrugated steel plate, thereby causing water leakage, but also problems in that it is not easy to achieve the quality control of a uniform thickness. Moreover, since an unnecessary portion such as a surface of the corrugated steel plate made of an impermeable material is coated with the bituminous material due to a spraying method, a material loss is high, and thus economic efficiency decreases.

On the other hand, the polyurea coating method is a method of performing coating using a spraying method similar to the asphalt bituminous coating method, except that polyurea having good elasticity is used as a material to prevent material separation, and top coating needs to be performed before application of the polyurea such that the polyurea can easily adhere to the surface of the corrugated steel plate.

Similarly to the asphalt bituminous coating method, the polyurea coating method described above can cause material separation due to the ductile behavior of the corrugated steel plates when the assembled corrugated steel plates are exposed to sunlight for a long time and when the backfilling is performed after the corrugated steel plate structure is assembled; however, since the polyurea has better elasticity and adhesion than the asphalt bituminous material, there is little possibility of water leakage due to material separation. However, the polyurea coating method also has a problem in that a material loss is high due to the spraying method, and thus the economic efficiency decreases.

Next, a urethane bolt cap waterproofing method is a method in which urethane is inserted into a bolt crest portion to which a nut is fastened and a soft PE bolt cap is put on the bolt crest portion to prevent urethane from leaking out, and it is the most commonly used method for waterproofing a bolt fastener of the corrugated steel plates.

The urethane bolt cap waterproofing method has a better waterproofing effect than the asphalt bituminous coating or polyurea coating method by waterproofing the bolt crest portion exposed on a back surface of the corrugated steel plate structure, but a problem arises in that the economic efficiency and constructability decrease.

In addition, since waterproofing is performed on each bolt fastener by manpower after the corrugated steel plates are assembled with bolts, there is a high risk of safety accidents, and problems arise in that, as the construction quality is determined depending on workers' ability, it is difficult to achieve the quality control and there is a risk of water leakage.

Moreover, a solidification period of at least three to five days or more is required depending on weather conditions to demonstrate full performance of a urethane material; however, in a case of a construction site where the construction period is short, backfilling can be carried out before the urethane material is solidified, and in this case, a problem of a high risk of water leakage arises.

### [Summary of Invention]

### [Technical Problem]

Objects of the present invention are to provide a filler for waterproofing a corrugated steel plate bolt fastener in which when multiple corrugated steel plates are assembled according to a design diagram so as to fabricate a corrugated steel plate structure, adjacent corrugated steel plates can be simultaneously assembled and waterproofed without a separate waterproofing process, and a waterproofing structure of a corrugated steel plate structure using same.

### [Solution to Problem]

In order to achieve the above-described object, the present invention provides a filler for waterproofing a corrugated steel plate bolt fastener, the filler enabling a space portion between a bolt and a bolt hole to be watertight by being pressed by a nut such that at least a part of the filler is inserted into and compressed in the space portion between the bolt hole and the bolt as the bolt fastened into the bolt hole at an overlap portion of adjacent corrugated steel plates penetrates the filler and the nut is screw-fastened to the bolt during assembly of the corrugated steel plates.

As an example, the filler may include a main body portion that allows the space portion between the bolt and the bolt fastener to be watertight by being pressed by the nut such that at least a part of the main body portion is inserted into and compressed in the space portion between the bolt hole and the bolt as the bolt penetrates the main body portion and the nut is screw-fastened to the bolt; and a close-contact support portion formed to project from an outer circumferential surface of the main body portion to have a diameter larger than a diameter of the bolt hole so that it is interposed between the nut screw-fastened to the bolt and the corrugated steel plates and is pressed by the nut to come into close contact with the corrugated steel plates.

Here, preferably, the main body portion is formed in a tapered shape to have an outer diameter which gradually decreases in a direction from the nut toward the bolt hole such that the main body portion is easily inserted into the space portion between the bolt hole and the bolt.

In addition, preferably, the close-contact support portion is formed to have a thickness of a cross section which gradually increases in a direction from an outer end of the close-contact support portion toward the main body portion.

In addition, the present invention provides a waterproofing structure of a corrugated steel plate structure using a filler for waterproofing a corrugated steel plate bolt fastener, the waterproofing structure enabling a space portion between a bolt and a bolt hole to be watertight by causing a nut to press the filler such that at least a part of the filler is inserted into and compressed in the space portion between the bolt hole and the bolt as the bolt fastened into the bolt hole at an overlap portion of adjacent corrugated steel plates penetrates the filler and the nut is screw-fastened to the bolt during assembly of the corrugated steel plates.

As an example, the filler used in the waterproofing structure of a corrugated steel plate structure may include: a main body portion that allows the space portion between the bolt and the bolt fastener to be watertight by being pressed by the nut such that at least a part of the main body portion is inserted into and compressed in the space portion between the bolt hole and the bolt as the bolt penetrates the main body portion and the nut is screw-fastened to the bolt; and a close-contact support portion formed to project from an outer circumferential surface of the main body portion to have a diameter larger than a diameter of the bolt hole so that it is interposed between the nut screw-fastened to the bolt and the corrugated steel plates and is pressed by the nut to come into close contact with the corrugated steel plates.

Here, preferably, the main body portion of the filler is formed in a tapered shape to have an outer diameter which gradually decreases in a direction from the nut toward the bolt hole such that the main body portion is easily inserted into the space portion between the bolt hole and the bolt.

In addition, preferably, the close-contact support portion is formed to have a thickness of a cross section which gradually increases in a direction from an outer end of the close-contact support portion toward the main body portion.

Moreover, the present invention may further include a washer that is interposed between the nut and the filler and presses the filler by coming into close contact with the filler as the nut is screw-fastened to the bolt.

Here, the nut and the washer may be integrally formed.

Meanwhile, the washer may have a projecting portion that is formed to project from a surface which is opposite to the corrugated steel plates when the washer comes into close contact with a crest of the corrugated steel plates.

### [Advantageous Effects of Invention]

As described above, a filler for waterproofing a corrugated steel plate bolt fastener and a waterproofing structure of a corrugated steel plate structure using the filler according to embodiments of the present invention enable a space portion to be watertight by compressing the filler in the space portion between the bolt hole and the bolt only through work of screw-fastening a nut to a thread portion of the bolt after the filler is fastened to the thread portion of the bolt penetrating the bolt hole when an overlap portion at which at least two corrugated steel plates overlap each other during assembly of corrugated steel plates is assembled.

Hence, the filler for waterproofing a corrugated steel plate bolt fastener and the waterproofing structure of a corrugated steel plate structure using the filler according to the embodiments of the present invention are effective in that a period of time for construction can be reduced substantially, that construction costs can also be reduced substantially, and that risks of safety hazards to workers can also be reduced substantially compared to a method of applying an additional asphalt bituminous material, polyurea, or the like on a portion of corrugated steel plates assembled with the bolt and the nut after assembly of adjacent corrugated steel plates with bolts and nuts or a waterproofing method in the related art in which an additional waterproofing operation such as a process of covering the bolt and the nut with a urethane bolt cap or the like needs to be performed.

In addition, the filler for waterproofing a corrugated steel plate bolt fastener and the waterproofing structure of a corrugated steel plate structure using the filler according to the embodiments of the present invention enable the space portion formed between the bolt and the bolt hole to be watertight only by performing simple bolting for connecting the overlap portion of adjacent corrugated steel plates, thereby facilitating quality control since uniform construction quality can be maintained regardless of the skill level of workers.

Ultimately, the filler for waterproofing a corrugated steel plate bolt fastener and the waterproofing structure of a corrugated steel plate structure using the filler according to the embodiments of the present invention are advantageous as follows: the period of time for constructing the corrugated steel plate structure can be reduced substantially; no separate waterproofing operation is necessary after assembling the corrugated steel plate structure, thereby substantially reducing construction costs; risks of safety hazards to workers can be reduced substantially; and uniform construction quality can be maintained regardless of the skill level of workers, thereby substantially improving customer satisfaction and reliability.

### [Brief Description of Drawings]

FIG. 1 is a cross-sectional view for illustrating a waterproofing structure of a corrugated steel plate structure using a filler for waterproofing a corrugated steel plate bolt fastener according to an embodiment of the present invention.
FIG. 2 is a cross-sectional view illustrating an example in which the waterproofing structure of a corrugated steel plate structure according to the embodiment of the present invention is applied to a crest section of adjacent corrugated steel plates.
FIG. 3 is a cross-sectional view illustrating an example in which the waterproofing structure of a corrugated steel plate structure according to the embodiment of the present invention is applied to a trough section of adjacent corrugated steel plates.
FIG. 4 is an enlarged view of a nut and a washer applied to FIG. 2.
FIG. 5 is an enlarged view of a nut and washer applied to FIG. 3.

### [Description of Embodiments]

Hereinafter, preferred embodiments of the present invention will be described in detail with reference to the following drawings.

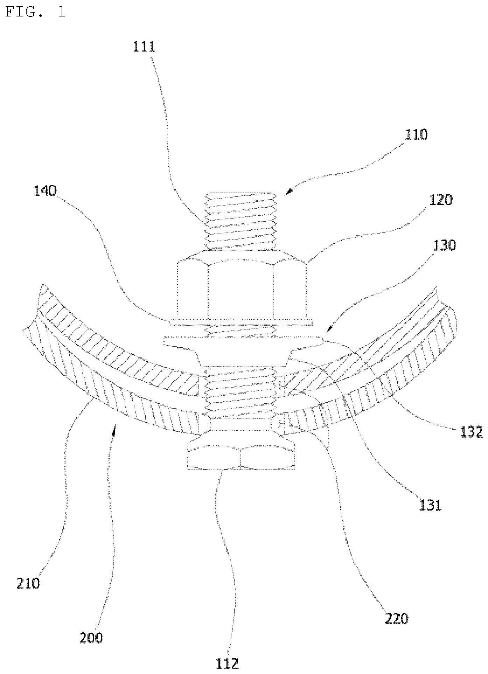

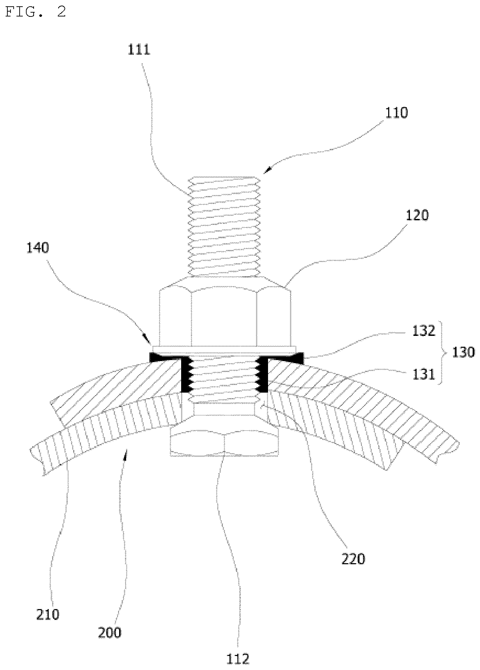

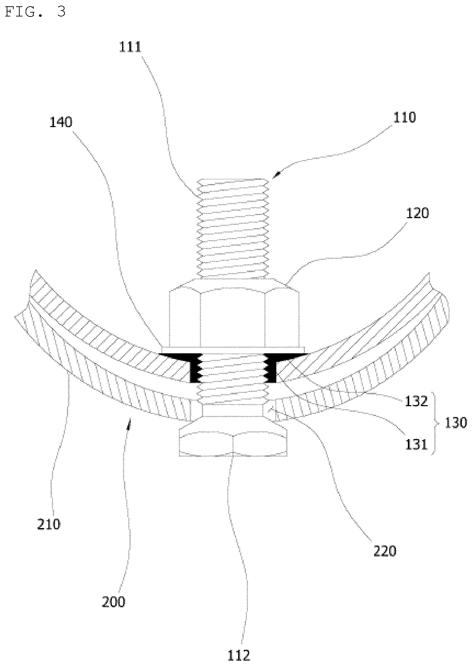

FIG. 1 is a cross-sectional view for illustrating a waterproofing structure of a corrugated steel plate structure using a filler for waterproofing a corrugated steel plate bolt fastener according to an embodiment of the present invention, FIG. 2 is a cross-sectional view illustrating an example in which the waterproofing structure of a corrugated steel plate structure according to the embodiment of the present invention is applied to a crest section of adjacent corrugated steel plates, and FIG. 3 is a cross-sectional view illustrating an example in which the waterproofing structure of a corrugated steel plate structure according to the embodiment of the present invention is applied to a trough section of adjacent corrugated steel plates.

With respect to FIGS. 1 to 3, is the waterproofing structure of a corrugated steel plate structure using a filler for waterproofing a corrugated steel plate bolt fastener according to the embodiment of the present invention may include a bolt 110, a nut 120, and a filler 130.

The bolt 110 may be fastened to a bolt hole 220 in an overlap portion of the adjacent corrugated steel plates 210 during assembly of the corrugated steel plates.

Here, a diameter of the bolt hole 220 machined in the overlap portion of the corrugated steel plates 210 may be formed larger than a diameter of a thread portion 111 of the bolt 110.

On the other hand, the bolt 110 has a head portion 112 positioned inside a corrugated steel plate structure 200 and is preferably fastened into the bolt hole 220 in the overlap portion of the corrugated steel plates 210 such that the filler 130 and the nut 120 can be fastened to the thread portion 111 of the bolt 110 from the outside of the corrugated steel plate structure 200.

The nut 120 may penetrate the bolt hole 220 and be screw-fastened to the thread portion 111 of the bolt 110 positioned on an outer side of the corrugated steel plate structure 200.

The filler 130 enables a space portion between the bolt 110 and the bolt hole 220 to be watertight by being pressed by the nut 120 such that at least a part of the filler is inserted into and compressed in the space portion between the bolt hole 220 and the bolt 110 as the bolt 110 penetrates the filler such that the filler is positioned between the corrugated steel plates 210 and the nut 120, and the nut 120 is screw-fastened to the thread portion 111 of the bolt 110.

For example, the filler 130 is preferably made of any one material of materials such as polyethylene, urethane, or Teflon.

In addition, the waterproofing structure of a corrugated steel plate structure using the filler for waterproofing a corrugated steel plate bolt fastener according to the embodiment of the present invention may further include a washer 140.

The washer 140 may be interposed between the nut 120 and the filler 130 such that the nut 120 can come into close contact with the filler 130 to press the filler 130 as the nut is screw-fastened to the bolt 110.

With reference to FIGS. 2 to 5, the washer is described in more detail.

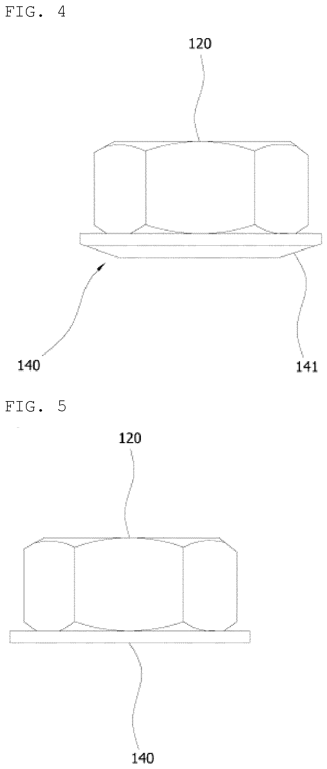

FIG. 4 is an enlarged view of the nut and the washer applied to FIG. 2, and FIG. 5 is an enlarged view of the nut and the washer applied to FIG. 3.

The washer 140 may be manufactured and used separately from the nut 120, but as illustrated in FIGS. 4 and 5, the washer 140 is preferably integrated with the nut 120.

In addition, as illustrated in FIG. 2, when the waterproofing structure of a corrugated steel plate structure according to the embodiment of the present invention is applied to a crest section of the adjacent corrugated steel plates 210 and the washer 140 comes into close contact with the crest section of the corrugated steel plates 210, the washer 140 may further include a projecting portion 141 formed on a surface opposite to the corrugated steel plates 210 as illustrated in FIG. 4.

On the other hand, as illustrated in FIG. 3, when the waterproofing structure of a corrugated steel plate structure according to the embodiment of the present invention is applied to a trough section of the adjacent corrugated steel plates 210 and the washer 140 comes into close contact with the trough section of the corrugated steel plates 210, the washer 140 is desirably formed to have a flat surface opposite to the corrugated steel plates 210, as illustrated in FIG. 5.

Next, the filler 130 that allows the space portion between the bolt 110 and the bolt hole 220 to be watertight by being pressed by the nut 120 such that at least a part of the filler is inserted into and compressed in the space portion between the bolt hole 220 and the bolt 110 as the nut 120 is screw-fastened to the bolt 110 will be described in detail.

As illustrated in FIG. 1, the filler 130 can include a main body portion 131 and a close-contact support portion 132.

The main body portion 131 enables the space portion between the bolt 110 and the bolt hole 220 to be watertight by being pressed by the nut 120 such that at least a part of the main body portion is inserted into and compressed in the space portion between the bolt hole 220 and the bolt 110 as the bolt 110 penetrates the main body portion and the nut 120 is screw-fastened to the thread portion 111 of the bolt 110.

Here, preferably, the main body portion 131 is formed in a tapered shape to have an outer diameter which gradually decreases in a direction from the nut 120 toward the bolt hole 220 such that the main body portion is easily inserted into the space portion between the bolt hole 220 and the bolt 110.

To be more specific, the main body portion 131 is formed in an inverted truncated cone shape to have an outer diameter which gradually decreases in a direction from the nut 120 toward the bolt hole 220, and thereby the main body portion can be easily inserted into the space portion between the bolt hole 220 and the bolt 110.

Here, the bottom outer diameter of the main body portion 131 facing the bolt hole 220 is formed smaller than the diameter of the bolt hole 220 as illustrated in FIG. 1, and the main body portion is formed in the inverted truncated cone shape in which an outer diameter thereof gradually increases in a direction from the bottom portion of the main body portion 131 toward the nut 120. In this manner, the main body portion 131 can be easily inserted into the space portion between the bolt hole 220 and the bolt 110 and pressed by the nut 120 to be compressed between the thread portion 111 of the bolt 110 and the bolt hole 220 in the overlap portion of the corrugated steel plates 210.

The close-contact support portion 132 may be formed to project from an outer circumferential surface of the main body portion 131 to have a diameter larger than the diameter of the bolt hole 220 so that it can be interposed between the nut 120 screw-fastened to the bolt 110 and the corrugated steel plates 210 and can be pressed by the nut 120 to come into close contact with the corrugated steel plates 210.

Here, the close-contact support portion 132 is formed to have a thickness of a cross section which gradually increases in a direction from an outer end thereof to the main body portion, and thereby an inner side of the close-contact support portion 132 is pressed to and comes into close contact with the bolt hole 220 with a greater force. In this manner, watertightness of the space portion formed between the bolt hole 220 and the bolt 110 can be further improved.

On the other hand, in a case where the washer 140 is interposed between the close-contact support portion 132 and the nut 120 or where the nut 120 integrated with the washer 140 is used, the close-contact support portion 132 can be pressed by the washer 140 to come into close contact with the corrugated steel plate 210 as the nut 120 is screw-fastened to the bolt 110.

Referring back to FIGS. 1 to 5, a process, operations, and effects of assembling the corrugated steel plate structure using the waterproofing structure of a corrugated steel plate structure using the filler for waterproofing a corrugated steel plate bolt fastener according to the embodiment of the present invention are described.

With respect to FIGS. 1 to 5, in order to assemble the corrugated steel plate structure 200 using the waterproofing structure of a corrugated steel plate structure using the filler for waterproofing a corrugated steel plate bolt fastener according to the embodiment of the present invention, the bolt holes 220 are first punched into the overlap portion at the factory and galvanizing is performed, and then multiple corrugated steel plates 210 brought to an assembly site of the corrugated steel plate structure 200 are arranged according to a design diagram such that the bolt holes 220 of adjacent corrugated steel plates 210 overlap each other.

After the corrugated steel plates 210 are arranged according to the design diagram as described above, the bolt 110 is fastened into the bolt holes 220 of the overlap portion of the corrugated steel plates 210 arranged to be adjacent to each other.

At this time, the bolt 110 has the head portion 112 positioned inside the corrugated steel plate structure 200, and thereby the head portion 112 can be supported on an inner surface of the corrugated steel plate structure 200. In addition, the thread portion 111 may penetrate the bolt hole 220 and be fastened into the bolt hole 220 to be exposed to the outside of the corrugated steel plate structure 200.

After the bolt 110 is fastened into the bolt hole 220 as described above, the filler 130 is fastened to the thread portion 111 of the bolt 110 such that the thread portion 111 projecting outward from the corrugated steel plate structure 200 penetrates the filler 130.

Here, the filler 130 has at least a part of the main body portion 131 that is inserted into the space portion between the bolt hole 220 and the bolt 110, and the close-contact support portion 132 is preferably fastened to the thread portion 111 of the bolt 110 to be closely supported on the outer surface of the corrugated steel plate structure 200.

After the filler 130 is fastened to the thread portion 111 of the bolt 110 projecting outward from the corrugated steel plate structure 200, the washer 140 is fastened to the thread portion 111 of the bolt 110 projecting outward from the corrugated steel plate structure 200. Then, the nut 120 is screw-fastened, or the nut 120 integrated with the washer 140 on a surface opposite to the close-contact support portion 132 of the filler 130 is screw-fastened to the thread portion 111 of the bolt 110 projecting outwards from the corrugated steel plate structure 200.

As described above, as the nut 120 is screw-fastened to the thread portion 111 of the bolt 110 projecting outwards of the corrugated steel plate structure 200, the nut 120 is moved to the bolt head portion 112 along the thread portion 111 of the bolt 110, and the washer 140 is also moved to the bolt head portion 112 side together with the nut 120 so that the filler 130 is also pushed and moved to the bolt head portion 112 side by the nut 120 and the washer 140.

When the filler 130 is pushed and moved to the bolt head portion 112 side as described above, the main body portion 131 of the filler 130 enables the space portion between the bolt 110 and the bolt hole 220 to be watertight by being inserted into and compressed in the space portion formed between the bolt 110 and the bolt hole 220 to come into contact with an outer circumferential surface of the thread portion 111 of the bolt 110 and the bolt hole 220.

At this time, the main body portion 131 of the filler 130 is formed in a tapered cone shape to have the outer diameter which gradually decreases in the direction from the nut 120 toward the bolt hole 220, thereby enabling the space portion between the bolt 110 and the bolt hole 220 to be watertight by being easily inserted into the space portion between the bolt hole 220 and the bolt 110 to be elastically compressed between a thread crest of the thread portion 111 of the bolt 110 and the bolt hole 220.

On the other hand, the close-contact support portion 132 of the filler 130 is pressed by the nut 120 and the washer 140 to be compressed on the outer surface of the corrugated steel plate 210 adjacent to the bolt hole 220 while being interposed between the washer 140 and an outer surface of the corrugated steel plate structure 200, thereby enabling the space portion between the bolt 110 and the bolt hole 220 to be still more stably watertight to improve waterproof performance.

Here, the close-contact support portion 132 is formed to have a thickness of a cross section which gradually increases in a direction from an outer end thereof toward the main body portion 131.

Hence, when the close-contact support portion 132 is pressed toward the corrugated steel plate structure 200 by the nut 120 and the washer 140, a force to cause the close-contact support portion 132 to come into close contact with the outer surface of the corrugated steel plate structure 200 gradually increases in a direction from an outer end portion of the close-contact support portion 132 toward the main body portion 131, thereby enabling waterproofing performance of the space portion between the bolt 110 and the bolt hole 220 to be still further improved.

On the other hand, in a case where the bolt hole 220 is formed on the crest section of the corrugated steel plate structure as illustrated in FIG. 2, the washer 140 has the projecting portion 141 formed to project from the surface opposite to the bolt hole 220, thereby causing the close-contact support portion 132 positioned between the bolt hole 220 and the bolt 110 to come into close contact with the corrugated steel plate structure 200 with higher pressure. Hence, the waterproofing performance of the space portion formed between the bolt 110 and the bolt hole 220 can be still further improved.

As described above, the filler for waterproofing a corrugated steel plate bolt fastener and the waterproofing structure of a corrugated steel plate structure using the filler according to the embodiments of the present invention enable the space portion to be watertight by compressing the filler 130 in the space portion between the bolt 110 and the bolt hole 220 only through work of screw-fastening the nut 120 to the thread portion 111 of the bolt 110 after the filler 130 is fastened to the thread portion 111 of the bolt 110 penetrating the bolt hole 220 when at least two corrugated steel plates 210 overlap each other during assembly of the corrugated steel plates.

Hence, the filler for waterproofing a corrugated steel plate bolt fastener and the waterproofing structure of a corrugated steel plate structure using the filler according to the embodiments of the present invention can substantially reduce a period of time for construction, construction costs, and risks of safety hazards to workers compared to a method of applying an additional asphalt bituminous material, polyurea, or the like on a portion of the corrugated steel plates 210 assembled with the bolt 110 and the nut 120 after assembly of the adjacent corrugated steel plates 210 with the bolt 110 and the nut 120 or a waterproofing method in the related art in which an additional waterproofing operation such as a process of covering the bolt 110 and the nut 120 with a urethane bolt cap or the like needs to be performed.

In addition, the filler for waterproofing a corrugated steel plate bolt fastener and the waterproofing structure of a corrugated steel plate structure using the filler according to the embodiments of the present invention enable the space portion formed between the bolt 110 and the bolt hole 220 to be watertight only by performing simple bolting for connecting the overlap portion of the adjacent corrugated steel plates 210, thereby having an advantage of facilitating quality control since uniform construction quality can be maintained regardless of the skill level of workers.

The detailed descriptions of the present invention described above are provided with reference to the preferred embodiments of the present invention, and a person skilled in the art or a person with ordinary skill in the art will be able to understand that the present invention can be variously modified and changed within the scope without departing from the ideas and the areas of techniques described in the claims to be described below.

### [Industrial Applicability]

The present invention can be used in industries of constructing tunnel structures, bridge structures, vertical holes, protective facilities, and buildings by assembling corrugated steel plates, and more specifically, can be used for waterproofing structures when corrugated steel plates are assembled.

## Claims

1. A filler for waterproofing a corrugated steel plate bolt fastener, the filler enabling a space portion between a bolt and a bolt hole to be watertight by being pressed by a nut such that at least a part of the filler is inserted into and compressed in the space portion between the bolt hole and the bolt as the bolt fastened into the bolt hole at an overlap portion of adjacent corrugated steel plates penetrates the filler and the nut is screw-fastened to the bolt during assembly of the corrugated steel plates.

2. The filler for waterproofing a corrugated steel plate bolt fastener according to claim 1,
the filler comprising:
a main body portion that allows the space portion between the bolt and the bolt fastener to be watertight by being pressed by the nut such that at least a part of the main body portion is inserted into and compressed in the space portion between the bolt hole and the bolt as the bolt penetrates the main body portion and the nut is screw-fastened to the bolt; and
a close-contact support portion that is formed to project from an outer circumferential surface of the main body portion to have a diameter larger than a diameter of the bolt hole so that it is interposed between the nut screw-fastened to the bolt and the corrugated steel plates and is pressed by the nut to come into close contact with the corrugated steel plates.

3. The filler for waterproofing a corrugated steel plate bolt fastener according to claim 2,
wherein the main body portion is formed in a tapered shape to have an outer diameter which gradually decreases in a direction from the nut toward the bolt hole such that the main body portion is easily inserted into the space portion between the bolt hole and the bolt.

4. The filler for waterproofing a corrugated steel plate bolt fastener according to claim 2,
wherein the close-contact support portion is formed to have a thickness of a cross section which gradually increases in a direction from an outer end of the close-contact support portion toward the main body portion.

5. A waterproofing structure of a corrugated steel plate structure using a filler for waterproofing a corrugated steel plate bolt fastener, the waterproofing structure enabling a space portion between a bolt and a bolt hole to be watertight by causing a nut to press the filler such that at least a part of the filler is inserted into and compressed in the space portion between the bolt hole and the bolt as the bolt fastened into the bolt hole at an overlap portion of adjacent corrugated steel plates penetrates the filler and the nut is screw-fastened to the bolt during assembly of the corrugated steel plates.

6. The waterproofing structure of a corrugated steel plate structure using a filler for waterproofing a corrugated steel plate bolt fastener according to claim 5,
wherein the filler includes:
a main body portion that allows the space portion between the bolt and the bolt fastener to be watertight by being pressed by the nut such that at least a part of the main body portion is inserted into and compressed in the space portion between the bolt hole and the bolt as the bolt penetrates the main body portion and the nut is screw-fastened to the bolt; and
a close-contact support portion that is formed to project from an outer circumferential surface of the main body portion to have a diameter larger than a diameter of the bolt hole so that it is interposed between the nut screw-fastened to the bolt and the corrugated steel plates and is pressed by the nut to come into close contact with the corrugated steel plates.

7. The waterproofing structure of a corrugated steel plate structure using a filler for waterproofing a corrugated steel plate bolt fastener according to claim 6,
wherein the main body portion is formed in a tapered shape to have an outer diameter which gradually decreases in a direction from the nut toward the bolt hole such that the main body portion is easily inserted into the space portion between the bolt hole and the bolt.

8. The waterproofing structure of a corrugated steel plate structure using a filler for waterproofing a corrugated steel plate bolt fastener according to claim 6,
wherein the close-contact support portion is formed to have a thickness of a cross section which gradually increases in a direction from an outer end of the close-contact support portion toward the main body portion.

9. The waterproofing structure of a corrugated steel plate structure using a filler for waterproofing a corrugated steel plate bolt fastener according to claim 5, further comprising:
a washer that is interposed between the nut and the filler and presses the filler by coming into close contact with the filler as the nut is screw-fastened to the bolt.

10. The waterproofing structure of a corrugated steel plate structure using a filler for waterproofing a corrugated steel plate bolt fastener according to claim 9,
wherein the nut and the washer are integrally formed.

11. The waterproofing structure of a corrugated steel plate structure using a filler for waterproofing a corrugated steel plate bolt fastener according to claim 9,
wherein the washer has a projecting portion that is formed to project from a surface which is opposite to the corrugated steel plates when the washer comes into close contact with a crest of the corrugated steel plates.
